# EUROPEAN PATENT SPECIFICATION

(11) **EP 0 606 279 B1**
(45) Date of publication and mention of the grant of the patent: **05.03.1997**
(21) Application number: 92919843.0
(22) Date of filing: 23.09.1992
(51) Int. Cl.: C08J 7/04, G02B 1/10

(54) **A METHOD OF PRODUCING A TRANSPARENT SUBSTRATE OF PLASTICS MATERIAL HAVING SURFACE TINTING WHICH IS RESISTANT TO SOLAR RADIATION**
VERFAHREN ZUM HERSTELLEN VON TRANSPARENTEN SUBSTRATEN AUS KUNSTSTOFFMATERIALEN MIT EINER OBERFLAECHENFARBE, DIE SONNENSTRAHLUNGSBESTAENDIG IST
PROCEDE DE PRODUCTION D'UN SUBSTRAT TRANSPARENT EN MATIERE PLASTIQUE PRESENTANT UNE COLORATION SUPERFICIELLE RESISTANTE AU RAYONNEMENT SOLAIRE

(30) Priority: 27.09.1991 IT MI912577
(43) Date of publication of application: 20.07.1994
(73) Proprietor: INTERCAST EUROPE S.P.A., I-43100 Parma (IT)
(72) Inventor: IORI, Giuseppe, I-42100 Reggio Emilia (IT); GIANI, Giangiuseppe, I-43100 Parma (IT)
(74) Representative: Perani, Aurelio
(86) International application number: EP9202202
(87) International publication number: WO9306160

(56) References cited:
- DE-B- 1 694 573
- US-A- 4 872 878
- Dialog Information Services, File 350, World Patent Index 63-80, Dialog accession no. 001994001, (SUWA) SUWA SEIKOSHA KK), "Tinted UV-absorbing, high strength plastics lens - based on diethylene glycol bis-allyl carbonate polymer, surface coated with a dye; POLYCARBONATE", JP 52146252, A, 771205, 7804
- Gächter, R., Müller, H. (eds.), "Taschenbuch der Kunststoff-Additive", 2nd edition, 1983, Carl Hanser Verlag , München Wien, p. 138
- The Merck Index, 10th edition, 1983, p. 1053

## Description

The present invention relates to a method of producing transparent substrates of plastics material, for example, spectacle lenses, visors in general and similar products, having surface tinting which is resistant to solar radiation.

### TECHNICAL FIELD

In the production of transparent products of plastics materials with tinted surfaces, particularly lenses for sunglasses, there is a particular need for the colour characteristics of the surface tinting of the product which is exposed to the solar radiation to remain as unchanged as possible.

In fact, as is known, the ultraviolet component of solar radiation tends to degrade the molecules of the dye which are dispersed in the surface layer of the product, leading to decolouration and/or colour changes thereof.

### BACKGROUND ART

In order to avoid this problem, which is known as ageing or colour "turning", the teaching of the prior art is invariably to select, from the dye molecules available, those which have the greatest possible resistance to the ultraviolet component of the solar radiation.

Azoic and anthraquinonic dyes selected from those belonging to the categories known in the Colour Index as "disperse dyes" and "acid dyes" are therefore used widely for tinting the surfaces of plastics lenses.

Although the products thus tinted have quite good resistance to ageing, even though the ageing is slowed down there is, in the end, nevertheless an unacceptable colour change.

The dyes with the greatest resistance to solar radiation also have the disadvantage that, at the molecular level, their dimensions are such as to slow considerably the rate at which they spread within the polymeric matrix of the substrate to be tinted.

There is therefore a considerable increase in the time needed to tint the product, with a corresponding increase in production costs.

DE 1 694 573 discloses a process for the production of intermediate layers for security glasses made of coloured polyvinylacetal containing softening and light-stabilizing agents. In order to stabilize the colour of these materials towards deterioration by light, an alkylated hydroxyphenylbenzotriazole is previously incorporated in the material, which is afterwards dyed using conventional methods.

JP-A-52146252 discloses plastic lenses based on diethyleneglycol bis-allyl carbonate polymers whose surface is coated with a dye. Such lenses are obtained by polymerizing a mixture including diethyleneglycol bis-allyl carbonate and a benzophenone-type U.V. absorber. The resultant lenses are then coated with a dye, by dipping them in an aqueous solution containing a dispersing dye.

The technical problem upon which the present invention is based is therefore to provide a method of producing a transparent substrate with surface tinting which substantially reduces the colour-changes in the surface tinting even after prolonged exposure to the sun's rays.

This problem is solved by a method of the type indicated above, characterised in that it includes the step of
transferring at least one stabilising compound for conferring resistance to ultraviolet radiation into a tinted surface layer thereof.

The stabilising compounds of the present invention are compounds which can prevent the dye compounds from being degraded by ultraviolet radiation.

Stabilising compounds which have been found useful in the method of the present invention are those known by the term UV absorbers. These are compounds which confer resistance to light and perform their protective action by absorbing ultraviolet radiation and dissipating it as heat. Of these, substituted benzophenones having the following structural formula are preferred: 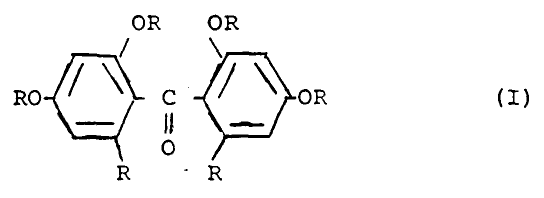 in which R = H, CH₃, C₅H₁₁, C₈H₁₇, SO₃Na.

Typical examples of UV absorbers are the products known commercially as Chimassorb and Uvinul, produced by CIBA and BASF, respectively.

Substituted benzotriazoles having the following structural formula may also be used as UV absorbers in the method of the present invention: 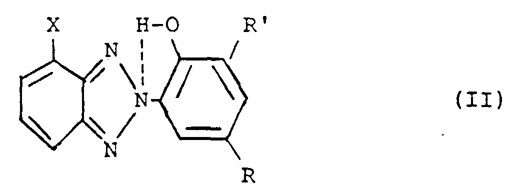 where:
R and R' may, independently, be H, methyl, terbutyl, octyl or amyl, and
X is H or Cl.

Of these 2(2'-hydroxy-5'-methylphenyl) benzotriazole and 2(2'-hydroxy-3',5-diterbutylphenyl) benzotriazole are preferred.

Further UV absorbers which have been found useful for the purposes of the invention are those belonging to the cyanoacrylates class, such as, for example, ethyl-2-cyano-3,3-diphenyl acrylate and 2-ethylhexyl-2-cyano-3,3-diphenyl acrylate and the salicylates such as, for example, phenyl salicylate and terbutylphenyl salicylate.

The method of the present invention may be used in the production of transparent substrates, particularly lenses for sunglasses, produced either from thermosetting polymers or from thermoplastic polymers. The plastics materials used are preferably produced by the polymerisation of the following monomers either in homopolymeric or copolymeric form: bis(allyl) carbonates of linear or branched glycols, acrylates and methacrylates, maleates and diallyl phthalates, triallyl cyanurates and isocyanurates, unsaturated polyesters, and vinyl monomers. The thermoplastic polymers usable include polycarbonate, polymethylmethacrylate, acetobutyrate, and cellulose propionate and acetate.

The surfaces of the substrates can be tinted with the use of the techniques known in the art, for example, by the immersion of the product in a dye bath, generally with an aqueous base, so that the dye molecules are spread over both its sides.

The dye compounds usable in the method of the present invention belong to the classes commonly used for this purpose in the art, particularly those indicated as "disperse dyes" and "acid dyes" in the Colour Index.

In particular, the following dyes may be used singly or in mixtures:
C.I. Disperse Blue 3, C.I. Disperse Blue 27,
C.I. Disperse Red 88, C.I. Disperse Yellow 3,
C.I. Acid Red 1.

According to the method of the invention, the step of introducing the dye into a surface layer of a transparent plastics substrate, for example, a spectacle lens, is preferably effected by the immersion of the substrate in an aqueous solution including a quantity, variable between 0.1 and 1% by weight, of one or more dyes.

The surface tinting of the substrate is achieved by means of conventional equipment known per se, at a temperature of between 85 and 95°C and for a period of between 10 and 120 minutes.

At the end of this step a transparent substrate, opposite sides of which have tinted layers about 10 microns thick, is produced.

At least one stabilising compound selected from those indicated above for conferring resistance to ultraviolet radiation is then transferred into the surface-tinted substrate.

In a preferred embodiment of the present invention, the stabilising compounds are transferred by the immersion of the surface-tinted substrate in an aqueous solution including from 0.5 to 2% by weight of at least one stabilising compound for conferring resistance to ultraviolet radiation, for a period of between 15 seconds and 4 minutes.

The temperature of the aqueous solution is preferably kept between 80 and 95°C for thermosetting plastics substrates and between 40 and 90°C for substrates produced with the use of thermoplastics polymers.

According to a further embodiment of the invention, the stabilising compounds can be transferred thermally in the dry state by the incorporation of the stabilising compound in a suitable support which is subsequently spread evenly over the surface of the product. For the purposes of the invention, supports selected from the group including PVC-, acrylic polymer- or polyester-based peelable lacquers, such as, for example, those used with a tampograph are preferred.

The product thus coated then undergoes heat treatment in an air oven kept at a temperature of between 100 and 130°C for a period of between 20 and 40 minutes.

Alternatively, the stabilising compound for conferring resistance to ultraviolet radiation may be transferred thermally in the dry state by being introduced into a microporous support such as, for example, a strip of filter paper which is then deposited on the tinted substrate with which it undergoes heat treatment in an air oven under the temperature and time conditions indicated above.

Further characteristics and advantages of the invention will become clearer from the following description of some examples of the method according to the invention.

### MODES FOR CARRYING OUT THE INVENTION

### EXAMPLE 1

70g of Disperse Blue 27 organic dye were dispersed in a 50 litre aqueous bath kept at a temperature of about 90°C.

A set of 10 plastics lenses made of diethylene glycol-bis(allyl) carbonate was immersed in the resulting solution for a period of 30 minutes until a transmittance of about 20% of the incident light was achieved.

The lenses thus treated were then immersed in an aqueous solution containing 0.5% by weight of tetrahydroxybenzophenone kept at a temperature of about 90°C.

The tetrahydroxybenzophenone was thus transferred into the polymeric matrices of the lenses.

### EXAMPLES 2 - 4

The method described in Example 1 above was used to produce diethylene glycol-bis(allyl) carbonate lenses the surfaces of which were tinted with the use of the dyes Disperse Blue 56, Disperse Blue 57 and Disperse Blue 3, respectively, and which were protected against radiation by means of tetrahydroxybenzophenone.

### COMPARATIVE EXPERIMENT 1

70g of Disperse Blue 27 and 125g of hydroxydimethoxy benzophenone were dispersed in a 50 l aqueous bath which was then heated to 90°C to produce a clear solution.

A set of 10 diethylene glycol-bis(allyl) carbonate lenses was then immersed in the resulting solution which was kept at a temperature of 90°C for a period of about 30 minutes so as to achieve a value of about 20% for the transmittance of incident visible light.

### COMPARATIVE EXPERIMENTS 2-4

The method described in Comparative Experiment 1 above was used to transfer dihydroxydimethoxybenzophenone and the following dyes: Disperse Blue 56, Disperse Blue 7 and Disperse Blue 3, respectively, into the surfaces of the lenses.

### EXAMPLE 5

A polymethylmethacrylate-based lacquer plasticised with 30% octyl phthalate in methyl ethyl ketone was supplemented with 10% by weight of 2(2' hydroxy-5'-methylphenyl) benzotriazole.

The lacquer was then spread evenly over the surfaces of diethylene glycol-bis(allyl) carbonate lenses the surfaces of which had already been tinted, in known manner, by means of Disperse Blue 3.

The lenses were then placed in an air oven and kept there for 30 minutes at a temperature of about 120°C in order to transfer the stabilising compound into the polymeric matrices of the lenses.

Upon completion of its exposure in the oven, the used lacquer was removed by washing with a chlorinated solvent.

### EXAMPLE 6

A strip of smooth white filter paper was immersed in a solution containing 10% by weight of hydroxydimethoxybenzophenone in a ketonic solvent.

When the strip had been impregnated and dried, it was placed in contact with a sheet of polymethylmethacrylate which has been tinted in bulk with Disperse Blue 7, in known manner. The lenses were then placed in an oven and treated as described in Example 9 above to transfer the stabilising compound for conferring resistance to light into the polymeric matrices of the lenses.

### EXAMPLE 7

2(2'-hydroxy-5'-methylphenyl) benzotriazole (Tinuvin P from CIBA) was added to a polyester-resin-based lacquer in a proportion of 10% by weight.

The lacquer was then spread evenly over the surfaces of 10 diethylene glycol-bis(allyl) carbonate spectacle lenses the surfaces of which had been tinted with Disperse Blue 56 and the lenses were then placed in an air oven for 30 minutes at 120°C to transfer the compound into the tinted surface layers of the lenses.

### EXAMPLE 8

The lenses produced in Examples 1-7 and in Comparative Experiments 1-4 above and a set of lenses treated in conventional manner with Disperse Blue 27, Disperse Blue 56, Disperse Blue 7 and Disperse Blue 3 dyes were subjected to a solar radiation resistance test in accordance with the BS2724/1987 standard. More particularly, the lenses were illuminated for 50 hours with a 450 watt xenon lamp positioned at a distance of 30 cm. As is known, these conditions simulate about 2 years' exposure to solar radiation.

The transmittance of the lenses was measured before and after exposure to the xenon lamp and the results of the tests are given in Table 1 below as the percentage increase in transmittance.

**TABLE 1**

| PERCENTAGE INCREASE IN TRANSMITTANCE | | | | |
|---|---|---|---|---|
| DYE | EX. 1-4 | Comp. Ex. 1-4 | EX. 5-7 | PRIOR ART |
| Disp. Blue 27 | 0.8 | 3 | | 10 |
| Disp. Blue 56 | 2.5 | 5 | < 5 | 20 |
| Disp. Blue 7 | 4 | 10 | < 5 | 38 |
| Disp. Blue 3 | 4.5 | 15 | < 5 | 45 |

It can readily be seen from the data given above that the various embodiments of the method of the present invention provide extremely effective protection for the layer of dye which is changed to a very insignificant extent.

In the case of the Disperse Blue 3 dye, which is one of the quickest to spread in the lenses and one of the most sensitive to ultraviolet radiation, the colour degradation obtained was 10 times less than that of conventionally tinted lenses.

The method of the present invention thus enables the use of dyes which spread rapidly and have low resistance to ultraviolet radiation, with an advantageous decrease in production times and costs.

Finally, the characteristics of the method of the invention enable good reproducibility of the conditions for the tinting and for the transfer of the stabilising compound and surface-tinted transparent substrates which are resistant to solar radiation can thus be produced with uniform characteristics on a large scale.

## Claims

1. A method of producing a transparent substrate of plastics material having surface tinting which is resistant to solar radiation, characterised in that it includes the step of transferring at least one stabilising compound for conferring resistance to ultraviolet radiation into a tinted surface layer thereof.

2. A method according to Claim 1, characterised in that the stabilising compound is selected from the group including:
- substituted benzophenones having the following structural formula: 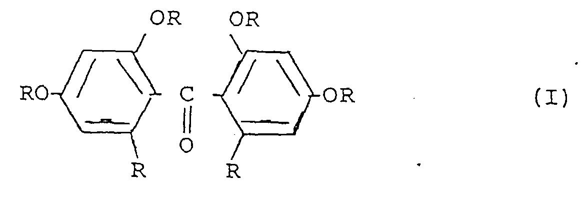 in which R = H, CH₃, C₅H₁₁, C₈H₁₇, SO₃Na;
- benzotriazoles having the following structural formula: 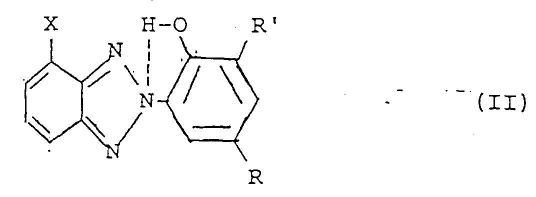 where:
R and R' may, independently, be H, methyl, terbutyl, octyl or amyl, and
X is H or Cl;
- cyanoacrylates,
- phenylsalicylates.

3. A method according to Claim 2 characterised in that the stabilising compound is selected from ethyl-2-cyano-3,3-diphenylacrylate and 2-ethylhexyl-2-cyano-3,3-diphenylacrylate.

4. A method according to Claim 2, characterised in that the stabilising compound is selected from phenyl salicylate and terbutylphenyl salicylate.

5. A method according to Claim 1; characterised in that the step of the transfer of the stabilising compound for conferring resistance to ultraviolet radiation is effected by the immersion of the substrate in an aqueous solution including from 0.5 to 2% by weight of the stabilising compound at a temperature of between 40 and 95°C and for a period of between 15 seconds and 4 minutes.

6. A method according to Claim 1, characterised in that the step of the transfer of the stabilising compound is dry-effected by the incorporation of the stabilising compound in a support, the deposition of the support on the surface-tinted substrate, and the subjection of the substrate thus obtained to heat treatment at a temperature of between 100 and 130°C and for a period of between 20 and 40 minutes.

7. A method according to Claim 6, characterized in that the support is selected from the group including filter paper, PVC-, acrylic polymer- or polyester-based lacquers.

8. A method according to any of Claims 1 to 7, characterized in that said plastics material are produced by the polymerization of monomers selected among the group including bis (allyl) carbonates of linear or branched glycols, acrylates and methacrylates, maleates- and diallyl phthalates, triallyl cyanurates and isocyanurates, unsaturated polyesters and vinyl monomers, either in homopolymeric or copolymeric form, or are thermoplastic polymers selected among the group including polycarbonate, polymethylmethacrylate, acetobutyrate, and cellulose propionate and acetate.

## Patentansprüche

1. Verfahren zur Herstellung eines durchsichtigen Substrats aus einem Plastikwerkstoff mit gegen Sonnenbestrahlung beständiger Oberflächenfärbung, dadurch gekennzeichnet, daß in eine farbige Oberflächenschicht desselben mindestens eine stabilisierende Verbindung zur Gewährleistung von UV-Beständigkeit übertragen wird.

2. Verfahren nach Anspruch 1, dadurch gekennzeichnet, daß die stabilisierende Verbindung aus der Gruppe:
substituierte Benzophenone der folgenden Strukturformel: 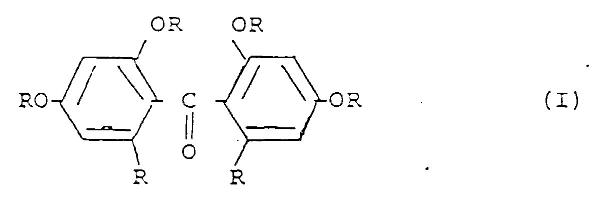 worin R H, CH₃, C₅H₁₁, C₈H₁₇ oder SO₃Na bedeutet,
Benzotriazole der folgenden Strukturformel: 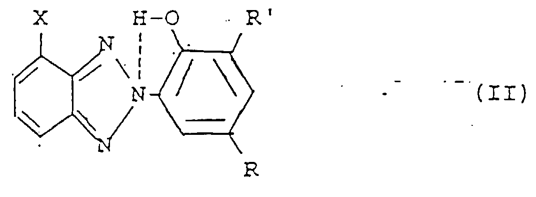 worin bedeuten:
R und R' unabhängig voneinander H, Methyl, tert.-Butyl, Octyl oder Amyl und
X H oder Cl;
Cyanoacrylate und
Phenylsalicylate
ausgewählt ist.

3. Verfahren nach Anspruch 2, dadurch gekennzeichnet, daß die stabilisierende Verbindung aus Ethyl-2-cyano-3,3-diphenylacrylat und 2-Ethylhexyl-2-cyano-3,3-diphenylacrylat ausgewählt ist.

4. Verfahren nach Anspruch 2, dadurch gekennzeichnet, daß die stabilisierende Verbindung aus Phenylsalicylat und tert.-Butylphenylsalicylat ausgewählt ist.

5. Verfahren nach Anspruch 1, dadurch gekennzeichnet, daß die Übertragung der stabilisierenden Verbindung zur Gewährleistung einer UV-Beständigkeit durch 15 s bis 4 min dauerndes Eintauchen des Substrats in eine 40 bis 95°C warme wäßrige Lösung mit 0,5 bis 2 Gew.-% der stabilisierenden Verbindung erfolgt.

6. Verfahren nach Anspruch 1, dadurch gekennzeichnet, daß die Übertragung der stabilisierenden Verbindung auf trockenem Wege durch Einarbeiten der stabilisierenden Verbindung in einen Träger, Aufbringen des Trägers auf das oberflächlich gefärbte Substrat und 20 bis 40 min dauernde Wärmebehandlung des erhaltenen Substrats bei einer Temperatur von 100 bis 130°C erfolgt.

7. Verfahren nach Anspruch 6, dadurch gekennzeichnet, daß der Träger aus der Gruppe Filterpapier sowie Lacke auf PVC-, Acrylpolymer- oder Polyesterbasis ausgewählt ist.

8. Verfahren nach einem der Ansprüche 1 bis 7, dadurch gekennzeichnet, daß das Plastikmaterial durch Polymerisation von Monomeren, ausgewählt aus der Gruppe Bis(allyl)carbonate linearer oder verzweigtkettiger Glykole, Acrylate und Methacrylate, Maleate und Diallylphthalate, Triallylcyanurate und -isocyanurate, ungesättigte Polyester und Vinylmonomere, entweder in homopolymerer oder copolymerer Form hergestellt wird oder aus thermoplastischen Polymeren, ausgewählt aus der Gruppe Polycarbonat, Polymethylmethacrylat, Acetobutyrat und Cellulosepropionat und -acetat, bestehen.

## Revendications

1. Procédé de production d'un substrat transparent en matières plastiques ayant une teinte en surface qui est résistante aux rayonnements solaires, caractérisé en ce qu'il comprend l'étape de transfert d'au moins un composé stabilisant pour conférer une résistance aux radiations ultraviolettes, dans une couche superficielle teintée de celui-ci.

2. Procédé selon la revendication 1, caractérisé en ce que le composé stabilisant est choisi parmi le groupe comprenant :
- des benzophénones substituées ayant la formule développée suivante : 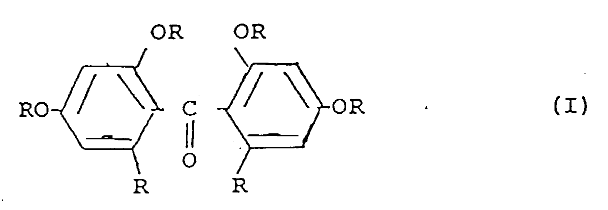 dans laquelle R = H, CH₃, C₅H₁₁, C₈H₁₇, SO₃Na ;
- des benzotriazoles ayant la formule développée suivante : 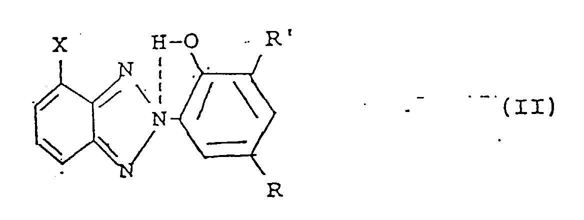 dans laquelle :
R et R' peuvent, indépendamment, représenter l'hydrogène, ou un groupe méthyle, tert-butyle, octyle ou amyle, et
X est H ou Cl ;
- des cyanoacrylates,
- des phénylsalicylates.

3. Procédé selon la revendication 2, caractérisé en ce que le composé stabilisant est choisi parmi le 2-cyano-3,3-diphénylacrylate d'éthyle et le 2-cyano-3,3-diphénylacrylate de 2-éthylhéxyle.

4. Procédé selon la revendication 2, caractérisé en ce que le composé stabilisant est choisi parmi le salicylate de phényle et le salicylate de tert-butylphényle.

5. Procédé selon la revendication 1, caractérisé en ce que l'étape de transfert du composé stabilisant pour conférer une résistance aux radiations ultraviolettes est effectuée par l'immersion du substrat dans une solution aqueuse comprenant de 0,5 à 2 % en poids du composé stabilisant à une température comprise entre 40 et 95°C et pendant une durée comprise entre 15 secondes et 4 minutes.

6. Procédé selon la revendication 1, caractérisé en ce que l'étape de transfert du composé stabilisant est effectuée à sec par l'incorporation du composé stabilisant dans un support, le dépôt du support sur le substrat teinté en surface, et la soumission du substrat ainsi obtenu à un traitement thermique à une température comprise entre 100 et 130°C et pendant une durée comprise entre 20 et 40 minutes.

7. Procédé selon la revendication 6, caractérisé en ce que le support est choisi parmi le groupe comprenant le papier-filtre, des laques à base de PVC, de polymère acrylique ou de polyester.

8. Procédé selon l'une quelconque des revendications 1 à 7, caractérisé en ce que lesdites matières plastiques sont produites par la polymérisation de monomères sélectionnés parmi le groupe comprenant des bis (allyl) carbonates de glycols linéaires ou ramifiés, des acrylates et méthacrylates, des maléates et diallyl phthalates, des triallyl cyanurates et isocyanurates, des polyesters insaturés et des monomères vinyliques, sous forme soit de copolymère soit d'homopolymère, ou sont des polymères thermoplastiques choisis parmi le groupe comprenant le polycarbonate, le polyméthylméthacrylate, l'acétobutyrate, et le propionate et l'acétate de cellulose.
